# EUROPEAN PATENT APPLICATION

(11) **EP 2 610 487 A1**
(43) Date of publication of application: **03.07.2013**
(21) Application number: 11195876.5
(22) Date of filing: 28.12.2011
(51) Int. Cl.: F03D 7/04, F03D 7/02

(54) **Wind turbine controller and method for controlling a wind turbine to provide redundancy**

(71) Applicant: Siemens Aktiengesellschaft, 80333 München (DE)
(72) Inventor: Breeze, Philip, Montgomery, SY15 6HB (GB); Nielsen, Kaj Skov, Issaquah WA, 98027 (US); Stoettrup, Michael, 7400 Herning (DK)

(57) **Abstract**

It is described a method and a controller for controlling a wind turbine (101) connected to a utility grid (113), the method comprising: detecting whether control data (119) from a central controller (115) are receivable, wherein the central controller is provided for controlling the wind turbine and a plurality of other wind turbines (109); if it is detected that control data from the central controller are receivable, receiving the control data (119) from the central controller (115); if it is detected that control data from the central controller are not receivable, receiving the control data (118) from a local controller (147) of the wind turbine (101); and controlling the wind turbine based on the received control data (118, 119).

## Description

### Field of invention

The present invention relates to a method and to a (wind turbine) controller for controlling in particular a wind turbine, in particular regarding frequency response, in particular providing redundant control via a local controller and a central controller. Also wave power or tidal power systems or distributed solar thermal or photo voltage systems can be controlled by the control method or the controller.

### Art Background

In a conventional power production facility a high number of wind turbines may transfer electric energy into a utility grid. Commercial and/or private consumers may consume energy taken from the utility grid. Thereby, the energy demand or power demand of the consumers may vary with time.

In particular, during large changes in the energy demand of the consumers, the energy demand or power demand of the consumers may not match the energy transferred from the power producers (in particular one or more wind turbines) to the utility grid. In this situation, in a conventional wind turbine, the power output or energy output of the wind turbine, in particular the power output of a converter of the wind turbine, may be increased for a short period of time, in order to improve the balance the amount of energy transferred from the wind turbine to the utility grid and the energy demand of the consumers taken from the utility grid. In particular, the frequency of the grid may drop, when the energy demand of the consumers is greater than the energy transferred from the power producers (in particular one or more wind turbines) to the utility grid. In contrast, the frequency of the utility grid may increase, if the energy transferred from the power producers (in particular one or more wind turbines) to the utility grid is greater than the energy consumed by the consumers. Thereby, the grid frequency may highly depend on the balance of generated and consumed power.

When the output of the converter of the wind turbine is increased for a short period of time to recover the frequency of the utility grid (such as 50 Hz for Europe or 60 Hz for the United States) more kinetic energy is pulled from the rotor of the wind turbine resulting in a slowdown of the rotational speed of the rotor.

To keep the grid frequency stable, the wind turbine or in particular a plurality of wind turbines connected to a utility grid must be controlled such as to correspond to a variation in the consumed power. Conventionally, the power output of the wind turbine may be controlled from a central controller which controls a plurality of wind turbine and which has a capability to acquire data regarding electrical properties of the grid, such as the frequency of the utility grid.

However, it has been observed that controlling the wind turbine by a central controller may have disadvantages, in particular when a communication between the central controller and the wind turbine fails.

There may be a need for a wind turbine controller and for a method for controlling a wind turbine, wherein the wind turbine can reliably be controlled in order to stabilize a grid frequency, in particular also in cases where a communication to a central wind park controller does not work properly.

### Summary of the Invention

This need may be met by the subject matter according to the independent claims. Advantageous embodiments of the present invention are described by the dependent claims.

According to an embodiment of the present invention it is provided a method for controlling a power production system (e.g. a wave power or tidal power system or distributed solar thermal or photo voltage system), in particular a wind turbine, connected to a utility grid, the method comprising: detecting whether control data from a central controller are receivable, wherein the central controller is provided for controlling the wind turbine and a plurality of other wind turbines; if it is detected that control data from the central controller are receivable, receiving the control data from the central controller; if it is detected that control data from the central controller are not receivable, receiving the control data from a local controller of the wind turbine; and controlling the wind turbine based on the received control data.

The central controller may control an entire wind farm or a portion of an entire wind farm comprising the wind turbine and the plurality of other wind turbines. In particular, the central controller may control the wind turbine and the plurality of other wind turbines via one or more communication line(s) which enable(s) sending control data from the central controller to the wind turbine and each of the wind turbines of the plurality of other wind turbines.

In particular, a (mono- or) bidirectional communication may be enabled using a (electrical and/or optical and/or wireless) communication line between the central controller and each of the wind turbines. The central controller may for example send control data which partially or entirely define the operation of the wind turbine. In particular, the central controller may send the control data relating to a desired power output of the wind turbine. In particular, the central controller may continuously send the control data i.e. every 50 ms or every 100 ms or every 150 ms or every 200 ms or every 500 ms. In particular, a time interval between subsequent control data portions sent by the central controller may amount to between 50 ms and 500 ms, in particular between 100 ms and 200 ms. Subsequent control data sent from the central controller to the wind turbine may demand a changing power output of the wind turbine.

When control data are received in a (regular) expected manner (in particular time pattern), it may be detected that the control data from the central controller are receivable and thus it may be detected that a communication link (either monodirectional or bidirectional) between the central controller and the wind turbine is working properly.

On the other hand, when control data are not received in a regular expected manner (in particular time pattern), it may be detected that the receiving the control data from the central controller is not possible, in particular because a communication link between the central controller and the wind turbine fails or is broken. Further, if it is detected that the control data of the central controller are not receivable, it may also indicate that the central controller fails.

In this case a switching may be performed to control the wind turbine not using the control data received from the central controller but controlling the wind turbine using the control data received from the local controller.

The local controller may be a part of the wind turbine and may be in particular a part or a module of a conventional wind turbine controller. The local controller may have a functionality to detect, whether the control data are receivable from the central controller or not.

In this sense the central controller may be a primary (primarily used) controller based on which control data the wind turbine should be controlled. The wind turbine should be primarily controlled using the control data received from the central controller, since the central controller may have access to more accurate grid data characterizing electrical properties of the utility grid (and/or its interconnections), such as the frequency of the utility grid and/or the aggregate production level of other power production units delivering power to the grid. This may be in particular, because the central controller may be located at or may at least acquire data from a location closer to a common connection node than the local controller.

The controlling the wind turbine may in particular comprise controlling a power output from the wind turbine such that the grid frequency is preferably maintained constant to a predetermined grid frequency, such as 50 Hz or 60 Hz.

Thus, also in the case of a failure of a communication between the central controller and the wind turbine or in case of a failure of the central controller itself, the wind turbine may be appropriately controlled to provide an appropriate frequency response, in order to stabilize the grid frequency.

According to an embodiment of the present invention the control data comprise target power output data indicative of a target power output of the wind turbine.

In particular, the target power output data or data derived therefrom may be supplied to a converter of the wind turbine which converts a variable frequency AC power stream to a fixed frequency AC power stream at an output terminal of the wind turbine. Thereby, the power output of the wind turbine may be adapted (increased or decreased) in order to stabilize the grid frequency, i.e. to balance energy production by the wind turbine and energy consumption by consumers connected to the utility grid.

According to an embodiment of the present invention the control method further comprises supplying the target power output data to a converter of the wind turbine, wherein the converter is connected to a generator of the wind turbine for converting an electric power stream output by the generator to a wind turbine power output stream having a predetermined frequency, wherein, upon receiving the target power output data, the converter adapts its operation such that the wind turbine power output stream is adjusted according to the target power output.

The target power output data (or data derived therefrom or based thereon) may be supplied (via an electrical and/or optical communication line and/or wireless communication or a combination thereof) to the converter (wherein the converter in particular may comprise a number of power transistors, such as IGBT's (Isolated Gate Bipolar Transistors), which may be switched using one or more gate control circuits. In particular, the converter may be capable of adjusting its power output stream (corresponding to the wind turbine power output stream) such as to have a particular frequency and such as to have a particular active power and/or reactive power. In particular, the target power output data indicating a target power output of the wind turbine may be input to the converter causing the gate control circuits to appropriately switch the plural transistors in the converter such as to output the target power output (particularly regarding active and/or reactive power) in the wind turbine power output stream. Thereby, an appropriate frequency response may be achieved such that the grid frequency can be maintained constant more accurately and more reliably.

According to an embodiment of the present invention the method further comprises measuring a quantity indicative of a frequency of the utility grid; and deriving the control data based on the frequency of the utility grid, in particular based on a deviation of the measured frequency of the utility grid from a predetermined frequency of the utility grid.

The measurement of the quantity indicative of a frequency of the utility grid (i.e. the actual frequency of the utility grid) may be performed at different locations depending on whether the control data from the central controller are receivable or not. Having measured a quantity which indicates the frequency of the utility grid enables to more appropriately react to a deviation of the frequency of the utility grid from the predetermined frequency of the utility grid (such as 50 Hz or 60 Hz). Thereby, the control method may be improved for maintaining the grid frequency constant.

According to an embodiment of the present invention the control method is performed, wherein the wind turbine and the plurality of other wind turbines are connected to the utility grid via a common connection node, wherein, if it is detected that the control data from the central controller are not receivable, the quantity is measured at a location between the wind turbine and the common connection node and the quantity is supplied to the local controller, wherein, if it is detected that the control data from the central controller are receivable, the quantity is measured at another location located, when viewed from the wind turbine, beyond the common connection node and the quantity is supplied to the central controller.

In particular, the wind turbine and the plurality of other wind turbine may be connected (in particular their respective wind turbine output terminals at the respective converter) via one or more transformers (such as at least one wind turbine transformer) to the point of common coupling. Also one or more substation transformer(s) may be connected between the wind turbine and the common connection node. Further, (as seen from the wind turbine) beyond the common connection node one or more further transformer(s) may be arranged for transforming the voltage at the common connection node to a higher voltage for transmission across long distances.

In particular, if the control data are not receivable from the central controller, the quantity is measured between the converter of the wind turbine and the wind turbine transformer. Further, in particular, if the control data from the central controller are receivable, the quantity may be measured beyond the common connection node at a substation transformer or even beyond the substation transformer such that the measurement may be performed as close to the utility grid as possible, and/or based on an upstream measurement like a high voltage direct current (HVDC) controller. Thereby, an accuracy of the measurement may be improved for improving the control method. In particular, Even if the frequency may be the same or similar at the different levels or locations on the transmission line, by measuring closer to the utility it may be possible to compensate for transmission line loss or even local demand between the turbines and the point of measurement. The measured quantity may also be indicative of a power balance between produced power and consumed power.

According to an embodiment of the present invention the control method is performed, wherein, if it is determined that the frequency of the utility grid is less than the predetermined frequency of the utility grid, the control data indicate to increase the wind turbine power output stream.

If it is determined that the frequency of the utility grid is less than the predetermined frequency, it may indicate that more power is consumed by consumers connected to the utility grid than power is generated by the wind turbine or the plurality of other wind turbines. Thereby, to counteract the decrease of the frequency of the utility grid to fall below the predetermined frequency of the utility grid, the amount of power generation is increased. Thereby, the grid frequency may increase to reach the predetermined grid frequency.

According to an embodiment of the present invention the control method is performed, wherein receiving the control data comprises receiving the control data by a wind turbine controller provided for controlling the operation of the wind turbine, wherein the controlling the wind turbine comprises controlling the wind turbine by the wind turbine controller.

The wind turbine may comprise a wind turbine controller which controls a number or all components of the wind turbine, such as the rotor blade regarding their pitch angle, the cooling system, the converter, the generator and others. The wind turbine controller may in particular control the wind turbine regarding the wind turbine power output stream. Further, the wind turbine controller may control a rotational speed of the generator or the rotor to which the rotor blades are connected. Further, the wind turbine controller may control pitching the blades (to adjust a orientation of their aerofoils relative to the wind speed) or increasing local power storage and occasionally a rotation about a vertical axis of the wind turbine (yawing).

In order to perform its control functionality the wind turbine controller may receive a number of input data, such as wind speed, wind direction, temperature, and also the control data from either the central controller or the local controller. For adjusting the wind turbine power output stream the wind turbine controller may for example control the converter and/or also the rotor blade pitch angle and/or also the yaw position of the wind turbine.

According to an embodiment of the present invention the control method is performed, wherein the wind turbine controller switches from receiving the control data from the central controller to receiving the control data from the local controller, if it is detected that the control data from the central controller are not receivable, wherein, if the control data from the local controller deviate more than a threshold from the control data previously received from the central controller, the wind turbine controller modifies the control data received from the local controller, to decrease the deviation, and the wind turbine controller controls the wind turbine based on the modified control data. In particular the turbine controller may ramp from the central controller value to the local control value, when communication break down is detected.

The wind turbine controller may for example continuously wait for control data to be received from the central controller. If the control data from the central control are not received for a particular time interval, the wind turbine control may conclude or decide that the control data from the central controller are not receivable (for any reason, such as communication link failure or central controller failure or malfunction). Subsequently, the wind turbine controller may switch to use and/or receive the control data from the local controller or may at least use the control data from the local controller for the further controlling steps.

Thereby, it may occur that the control data received from the local controller deviate from the control data previously received from the central controller, i.e. there may be a jump or deviation or difference between the control data received from the local controller and the control data previously received from the central controller. If this difference or this deviation exceeds a threshold, subsequent controlling the converter of the wind turbine with the previously received control data and the subsequently received control data may deteriorate the operation of the wind turbine. In order to provide a smooth transition, the wind turbine controller is adapted to modify the control data received from the local controller to decrease the difference. Only the modified control data may then be supplied to the converter of the wind turbine such that the converter is controlled using a continuously varying or smoothly varying target power output. Thereby, operation of the wind turbine may be improved, in particular for controlling a life time of components of the wind turbine.

In particular, the turbine may ramp between the central controller reference, and the local reference, when it switches from central to local control.

According to an embodiment of the present invention the control method is performed, wherein the wind turbine controller switches from receiving the control data from the local controller to receiving the control data from the central controller, if it is detected that the control data from the central controller are receivable, wherein, if the control data from the central controller deviate more than a threshold from the control data previously received from the local controller, the wind turbine controller modifies the control data received from the central controller, to decrease the deviation, and the wind turbine controller controls the wind turbine based on the modified control data.

In other embodiments the value or control data received from the central controller is used without modification, even if it is not identical to the control data received from the local controller.

According to an embodiment of the present invention the control method is performed, wherein the wind turbine controller modifies the control data such that the modified control data approach the control data received from the local controller and the central controller, respectively.

In particular, if a deviation between the previously received control data and the subsequently received control data (from the respective other controller) is present or determined, the modified control data may approach the subsequently received control data within a time interval between 100 ms and 5 s, in particular between 200 ms and 1 s. Thereby, a smooth transition between controlling the wind turbine using the control data received from the central controller or local controller may be achieved.

According to an embodiment of the present invention the control method is performed, wherein the local controller and/or the wind turbine controller is configurable by a central server, in particular the central controller, further in particular a central SCADA server. The central server may have access to more or different data which may enable a configuration of the local controller.

According to an embodiment of the present invention the local controller is integrated into the wind turbine controller. In particular, the local controller may be a single module or an individual module or a software code or a software program running within the wind turbine controller. Further, one or more further input terminal(s) may be provided or the data may be communicated via existent terminals or communication lines.

It should be understood that features individually or in any combination disclosed, described, explained or implied for a method for controlling a wind turbine may also be applied individually or in any combination to a wind turbine controller for controlling a wind turbine according to an embodiment and vice versa.

According to an embodiment of the present invention it is provided a wind turbine controller for controlling a wind turbine connected to a utility grid, the wind turbine controller comprising: a detection unit adapted to detect whether control data from a central controller are receivable, wherein the central controller is provided for controlling the wind turbine and a plurality of other wind turbines; a switching unit adapted to switch from receiving the control data from the central controller, if it is detected that control data from the central controller are receivable, to receiving the control data from a local controller of the wind turbine, if it is detected that control data from the central controller are not receivable; and a control unit adapted to control the wind turbine based on the received control data.

The detection unit may comprise one or more input terminals which may be connectable to the central controller and/or the local controller. The switching unit may be a particular module or software code or software program running within the wind turbine controller. In particular, the switching unit may comprise a decision block enabling the switching of the receiving the control data from the central controller or the local controller. The control unit may comprise an individual control module or/and a program code or a program and may further comprise one or more output terminals to which a communication line is connectable, wherein another end of the communication line may be connectable to a converter of the wind turbine. Other communication lines may be connectable to other components of the wind turbine, such as yawing system, rotor blade pitch angle system and others.

According to an embodiment of the present invention the local controller may be used to control the wind turbine, wherein the primary central controller fails. Thereby, a local frequency response controller may be implemented at each turbine independent of the central controller so that, if communication is lost between the turbine and the central controller, correct frequency response can still be provided by swapping the control to the local controller. This may introduce a level of redundancy for improving the reliability of the frequency response. Controlling the wind turbine by the control data received from the central controller may have the advantage to be able to compensate for the variation in wind speed at the individual wind turbine, making the wind power plant (comprised of plural wind turbines) behave more like a traditional power plant. A simple controller also may make it simple to test and demonstrate a combined response from the entire plan. Further, it may allow the grid operator to change the set point power reference (or voltage reference) and see an impact during the frequency response. The local control mode (for controlling the wind turbine using the local controller) may only be enabled, when a communication or a data link to the central controller is faulty or has timed out.

In the wind turbine controller a new function may be introduced that may ensure a bump-less transition or smooth transition or continuous transition, if communication between the wind turbine and the central controller is lost during a frequency event. The bump-less function may be provided for both the switching from the central to the local controller and/or the local to the central controller.

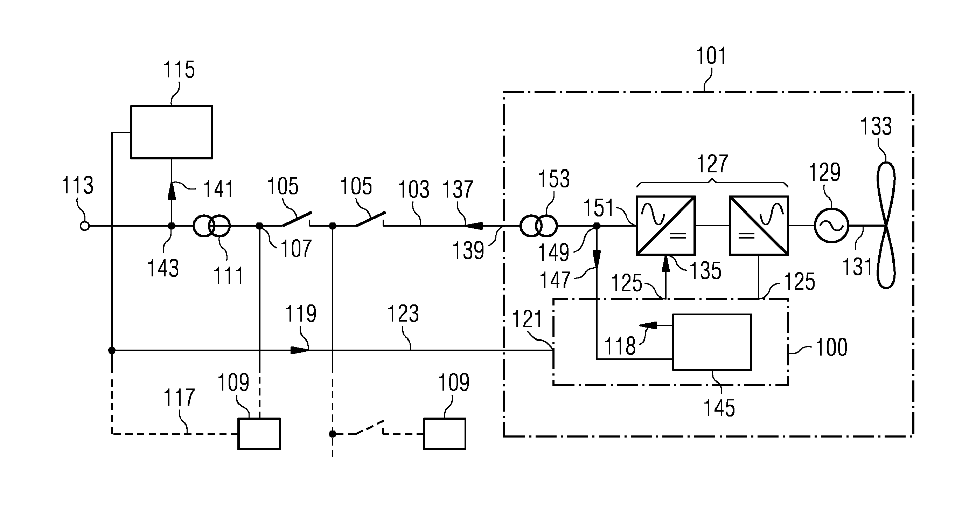

### Brief Description of the Drawing

Embodiments of the present invention are now described with reference to the accompanying figure.

The figure schematically illustrates a wind turbine which is controlled by a wind turbine controller according to an embodiment of the present invention, wherein the wind turbine controller performs a method according to an embodiment of the present invention.

### Detailed Description

The Figure illustrates a wind turbine 101 comprising a wind turbine controller 100 according to an embodiment of the present invention, wherein the wind turbine 101 is connected via a transmission line 103 comprising switches 105 to a common connection node 107.

To the common connection node 107 a number of other wind turbine 109 are connected. Via a substation transformer 111 the common connection node 107 is connected to a utility grid 113.

A central controller 115 controls the wind turbine 101 (and also other wind turbines 109 via communication lines 117) by sending control data 119 (indicated by an arrow pointing from the central control 115 to the wind turbine 101) to the wind turbine 101 and in particular to an input terminal 121 of the wind turbine controller 100. Thereby, the central controller 115 sends the control data 119 every time interval that may be e.g. between 50 ms and 500 ms, in particular around 150 ms.

The wind turbine controller 100 comprises a detection module which detects the incoming control data 119 received from the central controller 115. If the wind turbine controller 100 detects that the control data 119 are not anymore received from the central controller 115, the detection module decides that the control data 119 are not anymore receivable from the central controller 115, e.g. due to a failure of the communication line 123 or due to a failure of the central controller 115.

In particular, the control data comprise target power output data which are communicated using output terminal 125 to a converter 127 of the wind turbine. Thereby, the converter 127 is electrically connected to a wind turbine generator 129 which in turn is mechanically connected to a rotation shaft 131 which is driven by rotating rotor blades 133. The target power output data 135 are supplied to the converter 127 by the wind turbine controller 100.

Thereby, the converter 127 adapts its operation such that the wind turbine power output stream 137 output at the wind turbine output terminal 139 is adjusted according to the target power output which represents the desired target power to be output by the wind turbine 101.

Thereby, the central controller 115 receives measurement data 141 being measured at a location 143 between the substation transformer 111 and the utility grid 113, and/or the measurement may be on both sides of the transformer 111. The measurement data 141 comprise a quantity which is indicative of a frequency of the utility grid 113. The control data transmitted from the central controller 115 to the wind turbine controller 100 are derived in dependency of the measurement data 141, i.e. in dependency of the frequency of the utility grid 113.

If for example the frequency of the utility grid 113 drops below the predetermined grid frequency of 50 Hz (or 60 Hz), then the central controller 115 transmits the control data 119 to the wind turbine controller 100, wherein the target power output data 135 derived from the control data 119 indicate to increase the power output stream 137 of the wind turbine 101.

To handle a case of a communication failure or a failure of the central controller 115, the wind turbine controller 100 comprises a local controller 145 which may be implemented as a software module or hardware module within the wind turbine controller 100.

The local controller 145 receives measurement data 147 from a location 149 between an output terminal 151 of the converter 127 and the wind turbine transformer 153. The measurement data 147 are indicative of the frequency of the AC current and voltage at the location 149 and reflect the frequency of the utility grid 113, although they may deviate from the frequency of the utility grid as determined by measuring properties of the utility grid at the location 143.

Upon detecting that the control data 119 are not receivable from the central controller 115 control data generated within the local controller 145 are received within the wind turbine controller 100 and target power output data 135 are supplied to the converter 127. Thereby, controlling the converter 127 with respect to a suitable frequency response is also possible in case of a communication problem between the central controller 115 and the wind turbine controller 100.

## Claims

1. Method for controlling a power production system, in particular a wind turbine (101), connected to a utility grid (113), the method comprising:
detecting whether control data (119) from a central controller (115) are receivable, wherein the central controller is provided for controlling the power production system, in particular the wind turbine, and a plurality of other power production systems, in particular wind turbines (109);
if it is detected that control data from the central controller are receivable, receiving the control data (119) from the central controller (115) ;
if it is detected that control data from the central controller are not receivable, receiving the control data (118) from a local controller (147) of the wind turbine (101) ; and
controlling the power production system, in particular the wind turbine, based on the received control data (118, 119) .

2. Method according to claim 1, wherein the control data comprise target power output data (135) indicative of a target power output of the power production system, in particular the wind turbine.

3. Method according to claim 2, further comprising:
supplying the target power output data (135) to a converter (127) of the power production system, in particular the wind turbine (101), wherein the converter is connected to a generator (129) of the power production system, in particular the wind turbine, for converting an electric power stream output by the generator to a power production system power output stream (137), in particular wind turbine power output stream (137) having a predetermined frequency,
wherein, upon receiving the target power output data (135), the converter (127) adapts its operation such that the power production system power output stream (137), in particular the wind turbine power output stream (137) is adjusted according to the target power output.

4. Method according to one of the preceding claim, further comprising:
measuring a quantity (141, 147) indicative of a frequency of the utility grid; and
deriving the control data (118, 119) based on the frequency of the utility grid (113), in particular based on a deviation of the measured frequency of the utility grid from a predetermined frequency of the utility grid.

5. Method according to claim 4, wherein the power production system, in particular the wind turbine (101) and the plurality of other power production systems, in particular wind turbines (109) are connected to the utility grid via a common connection node (107) ,
wherein, if it is detected that the control data (119) from the central controller are not receivable, the quantity (147) is measured at a location (149) between the power production system, in particular the wind turbine (101), and the common connection node (107) and the quantity (147) is supplied to the local controller (145),
wherein, if it is detected that the control data (119) from the central controller (115) are receivable, the quantity (141) is measured at another location (143) located, when viewed from the power production system, in particular the wind turbine, beyond the common connection node (107) and the quantity (141) is supplied to the central controller (115) .

6. Method according to claim 4 or 5, wherein, if it is determined that the frequency of the utility grid is less than the predetermined frequency of the utility grid, the control data (118, 119) indicate to increase the power production system power output stream, in particular the wind turbine power output stream (137).

7. Method according to one of claims 4 to 6, wherein, if it is determined that the frequency of the utility grid is greater than the predetermined frequency of the utility grid, the control data indicate to decrease the power production system power output stream, in particular the wind turbine power output stream (137).

8. Method according to any of the preceding claims,
wherein receiving the control data comprises receiving the control data at a power production system controller, in particular a wind turbine controller (100), provided for controlling the operation of the power production system, in particular the wind turbine,
wherein the controlling the power production system, in particular the wind turbine comprises controlling the power production system, in particular the wind turbine, by the power production system controller, in particular the wind turbine controller.

9. Method according to the preceding claim,
wherein the power production system controller, in particular the wind turbine controller (100), switches from receiving the control data (119) from the central controller (115) to receiving the control data (118) from the local controller (145), if it is detected that the control data from the central controller are not receivable,
wherein, if the control data (118) from the local controller (145) deviate more than a threshold from the control data (119) previously received from the central controller (115), the power production system controller, in particular the wind turbine controller, modifies the control data received from the local controller, to decrease the deviation, and the power production system controller, in particular the wind turbine controller controls the power production system, in particular the wind turbine, based on the modified control data.

10. Method according to claim 8 or 9,
wherein the power production system controller, in particular the wind turbine controller, switches from receiving the control data from the local controller to receiving the control data from the central controller, if it is detected that the control data from the central controller are receivable,
wherein, if the control data from the central controller deviate more than a threshold from the control data previously received from the local controller, the power production system controller, in particular the wind turbine controller, modifies the control data received from the central controller, to decrease the deviation, and the power production system controller, in particular the wind turbine controller, controls the power production system, in particular the wind turbine, based on the modified control data or based on the unmodified control data.

11. Method according to claim 9 or claim 10,
wherein the power production system controller, in particular the wind turbine controller, modifies the control data such that the modified control data approach the control data received from the local controller and the central controller, respectively.

12. Method according to any of the preceding claims, wherein the local controller and/or the power production system controller, in particular the wind turbine controller, is configurable by a central server, in particular the central controller, further in particular a central SCADA server.

13. Method according to any of the preceding claims, wherein the local controller (145) is integrated into the power production system controller, in particular the wind turbine controller (100).

14. Power production system controller, in particular wind turbine controller (100), for controlling a power production system, in particular a wind turbine (101), connected to a utility grid (113), the power production system controller comprising:
a detection unit adapted to detect whether control data from a central controller are receivable, wherein the central controller is provided for controlling the power production system, in particular the wind turbine, and a plurality of other power production systems, in particular wind turbines;
a switching unit adapted to switch
from
receiving the control data from the central controller, if it is detected that control data from the central controller are receivable,
to
receiving the control data from a local controller of the power production system, in particular the wind turbine, if it is detected that control data from the central controller are not receivable; and
a control unit adapted to control the wind turbine based on the received control data.
